# EUROPÄISCHE PATENTANMELDUNG

(11) **EP 2 716 394 A1**
(43) Veröffentlichungstag der Anmeldung: **09.04.2014**
(21) Anmeldenummer: 12187615.5
(22) Anmeldetag: 08.10.2012
(51) Int. Cl.: B23H 5/04, B23H 9/10

(54) **Kombiniertes Bohrverfahren eines Schichtsystems, bei dem eine mechanische Bearbeitung und eine EDM Bearbeitung erfolgt**

(71) Anmelder: Siemens Aktiengesellschaft, 80333 München (DE)
(72) Erfinder: Bolms, Hans-Thomas, 45481 Mülheim an der Ruhr (DE); Dreher, Horst-Michael, 10119 Berlin (DE)

(57) **Zusammenfassung**

Durch die Verwendung eines zweistufigen Verfahrens aus mechanischen Abtragungen und EDM-Bearbeitung können in einem Schichtsystem aus metallischem Substrat und einer nichtmetallischen äußersten Schicht (10) konturgenau symmetrische oder asymmetrische Löcher hergestellt werden.

## Beschreibung

Die Erfindung betrifft ein Verfahren zur Herstellung eines Lochs in einem Schichtsystem, bei dem zuerst ein mechanisches Abtragungsverfahren und dann ein EDM-Abtragungsverfahren verwendet wird.

Schichtsysteme, wie sie bei Gasturbinenbauteilen verwendet, die ein metallisches Substrat, eine metallische Haftvermittlerschicht und eine äußere keramische Schicht aufweisen, müssen zur Herstellung von Kühlluftbohrungen bearbeitet werden. Die EDM-Bearbeitung von nicht-leitenden Materialien, wie z.B. den keramischen Wärmedämmschichten auf den Gasturbinenbauteilen ist aufwändig und oft ist ein Laserverfahren zum Abtragen von keramischem Material aufgrund geometrischer Bedingungen des Bauteils nicht möglich.

Es ist daher Aufgabe der Erfindung ein Verfahren aufzuzeigen, das ein verbessertes Verfahren zur Herstellung von Löchern in einem Schichtsystem aufzeigt, bei dem ein äußerer Randbereich nicht mittels EDM bearbeitet werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figuren 1, 2, 3: schematisch den Ablauf des erfindungsgemäßen Verfahrens;
- Figur 4: eine Liste von Superlegierungen

Die Figurenbeschreibung stellt nur Ausführungsbeispiele der Erfindung dar.

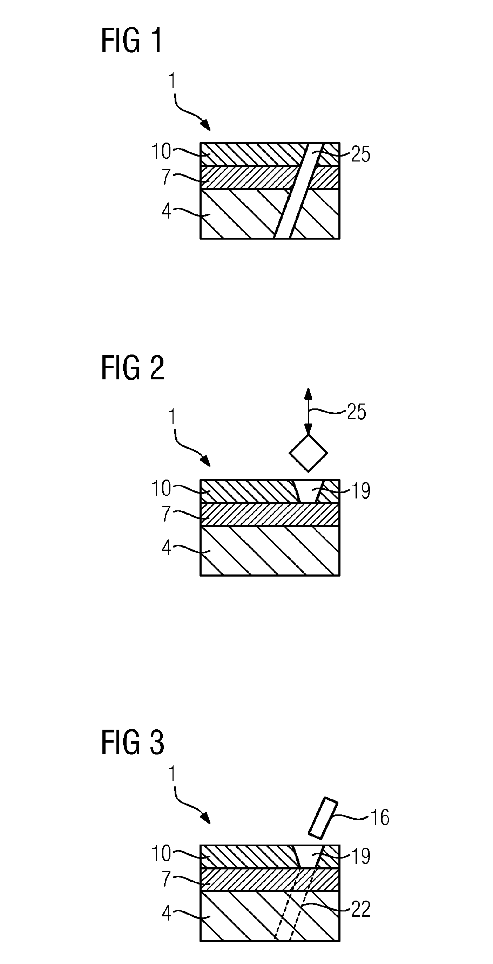

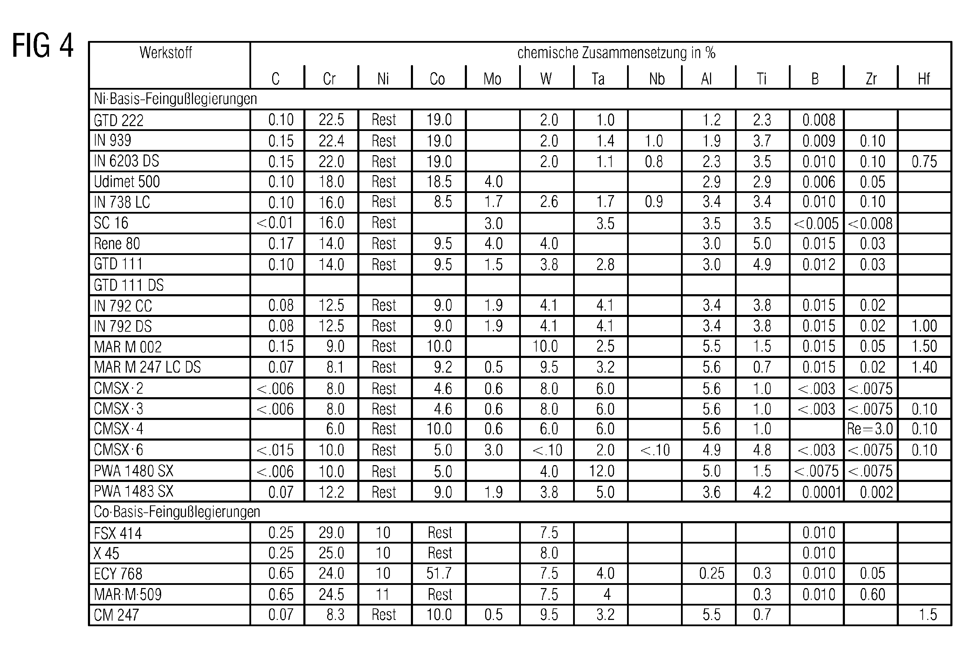

In Figur 1 ist ein Schichtsystem 1 gezeigt, das mit dem erfindungsgemäßen Verfahren bearbeitet werden soll.
Das Schichtsystem 1 weist ein Substrat 4 auf, das metallisch ist oder zumindest durch EDM-Bearbeitung zu bearbeiten ist und bei Gasturbinenbauteilen eine nickel- oder kobaltbasierte Legierung, insbesondere gemäß Figur 4, aufweist.
Auf dem Substrat 4 ist optional eine metallische Haftvermittlerschicht 7 vorhanden, die vorzugsweise eine NiCoCrAlY-Legierung aufweist.

Auf dem Substrat 4 und der metallischen Haftvermittlerschicht 7 ist gegebenenfalls ein thermisch gewachsenes Aluminiumoxid (TGO) vorhanden (nicht darstellt), aber jedenfalls ist als äußerste Schicht eine eine keramische Schicht 10 oder eine solche Hartstoffschicht vorhanden, die sich mittels EDM nicht bearbeiten lässt.
Bei Gasturbinenbauteilen ist das Material der keramischen Schicht 10 vorzugsweise ein Pyrochlor-, Perowskit- oder Zirkonoxid-basiertes Material.

Durch dieses Schichtsystem hindurch, ausgehend von der äußersten Schicht 10, soll ein Loch, vorzugsweise ein Durchgangsloch 25 erzeugt werden.
Dabei wird gemäß Figur 1 Material der äußersten Schicht 10 durch einen Diamant abgetragen. Dies geschieht vorzugsweise durch Vibrieren eines Diamanten, wobei der Diamant über die Oberfläche verfahren wird. Variationen von relativen Bewegungen von Substrat und Diamanten sind möglich.

Figur 2 zeigt schon den Bereich 19, der mit dem Diamanten 25 hergestellt wurde.
Vorzugsweise weist der Bereich 19 eine asymmetrische Struktur auf, wie er von Kühlluftbohrungen mit Shapes, dem sogenannten Diffusor bekannt ist und in seiner Endkontur hergestellt wird.

Zur weiteren Bearbeitung zur Herstellung des "Metering Holes" oder des symmetrischen Durchgangslochs 22 des Lochs 25 wird eine EDM-Elektrode 16 verwendet, die durch den Diffusorbereich 19 oder den keramischen Schichtbereich 13 durchgeführt werden kann und die optional vorhandene metallische Haftvermittlerschicht 7 und das Substrat 4 hindurch Material entfernen kann, da diese elektrisch leitfähig sind und dem EDM-Verfahren oder ähnlichen Verfahren zugänglich sind.

Eine weitere Nachbearbeitung mittels Laser, insbesondere des Diffusors 19 zur Fertigstellung, ist nicht notwendig.

## Patentansprüche

1. Verfahren zur Herstellung eines Lochs (25) in einem Schichtsystem,
das zumindest
ein metallisches Substrat (4) und
eine äußerste Schicht (10) aufweist,
wobei die äußerste Schicht (10) elektrisch nicht-leitfähig ist, so dass die äußerste Schicht (10) mittels eines EDM-Verfahren nicht bearbeitbar ist,
wobei im ersten Schritt ein äußerer Bereich (19) des Lochs (25) durch mechanisches Abtragen erfolgt,
wobei durch einen Diamanten Material von der Schicht (10) in dem äußeren Bereich (19) abgetragen wird und
in einem letzten Verfahrensschritt,
wenn zumindest das unterliegende Substrat oder zumindest eine optional vorhandene, metallische Haftvermittlerschicht (7) erreicht ist,
eine EDM-Elektrode (16) oder elektronisches Werkzeug verwendet wird,
um einen weiteren Teil oder einen restlichen Teil des Lochs (25) zu erzeugen.

2. Verfahren nach Anspruch 1,
bei dem der Diamant (13) vibrierend über die Oberfläche der äußersten Schicht (10) verfahren wird.

3. Verfahren nach einem oder beiden der Ansprüche 1 oder 2,
bei dem das Verfahren an den Stellen eines Schichtsystems angewendet wird, bei denen ein Laserstrahl aufgrund der konkaven Krümmung einer Oberfläche nicht zugänglich ist.

4. Verfahren nach einem oder mehreren der Ansprüche 1, 2 oder 3,
wobei die äußerste Schicht (10) keramisch ist, insbesondere Zirkonoxid Pyrochlorr oder ein Perowskit aufweist.

5. Verfahren nach einem oder mehreren der Ansprüche 1, 2, 3 oder 4,
bei dem das Schichtsystem aus
metallischem Substrat (4),
optional einer metallischen Haftvermittlerschicht (7), optional einer Oxidschicht auf dem Substrat (4) oder auf der Haftvermittlerschicht (7) und
einer keramischen Schicht besteht.

6. Verfahren nach einem oder mehreren der vorherigen Ansprüche,
bei dem durch den Diamanten ein äußerer Bereich (19) des Lochs (25) vollständig hergestellt wird,
insbesondere ein asymmetrisch ausgebildeter Diffusor (19).

7. Verfahren nach einem oder mehreren der vorherigen Ansprüche,
bei dem keine weitere Nachbearbeitung nach der Diamant- und EDM-Bearbeitung erfolgt.
